# EUROPÄISCHE PATENTSCHRIFT

(11) **EP 2 412 947 B1**
(45) Veröffentlichungstag und Bekanntmachung des Hinweises auf die Patenterteilung: **04.04.2018**
(21) Anmeldenummer: 11170505.9
(22) Anmeldetag: 20.06.2011
(51) Int. Cl.: F01N 3/30, F01N 3/22, F16K 31/126, F16K 31/128

(54) **Ansteueranordnung für ein Sekundärluftventil**
Control assembly for a secondary air valve
Agencement de commande pour une vanne d'air secondaire

(30) Priorität: 28.07.2010 DE 102010032578
(43) Veröffentlichungstag der Anmeldung: 01.02.2012
(73) Patentinhaber: Pierburg GmbH, 41460 Neuss (DE)
(72) Erfinder: Paffrath, Holger, Dr., 50259 Pulheim (DE); Plogmann, Hans-Peter, 41462 Neuss (DE)
(74) Vertreter: Patentanwälte ter Smitten Eberlein-Van Hoof Rütten Partnerschaftsgesellschaft mbB

(56) Entgegenhaltungen:
- DE-A1- 3 526 279
- GB-A- 2 096 487
- US-A- 4 014 169
- US-A- 4 112 678
- US-A- 4 454 855

## Beschreibung

Die Erfindung betrifft eine Ansteueranordnung für ein Sekundärluftventil mit einem einen Einlass und einen Auslass aufweisenden Ventilgehäuse, mit einem zwischen dem Einlass und dem Auslass angeordneten, eine Ventilöffnung aufweisenden Ventilsitz und mit einem relativ zur Ventilöffnung zwischen einer Offen-Stellung und einer Geschlossen-Stellung über eine Ventilstange bewegbaren Ventilkörper, mit einem ersten und einem zweiten Steuerraum, die durch eine Membrane fluidisch voneinander getrennt sind, wobei die Membrane auf die Ventilstange einwirkt und wobei ein Umschaltventil vorgesehen ist, das mit einem Steuerraum derart fluidisch verbunden ist, dass der Steuerraum in einem Unterdruck oder einem Überdruck beaufschlagbar ist.

Eine derartige Ansteueranordnung ist beispielsweise aus der deutschen Offenlegungsschrift DE 101 48 384 A1 bekannt. Hierbei wird ein Steuerraum mit dem Druck der Sekundärluftpumpe beaufschlagt um das Sekundärluftventil möglichst schnell zu öffnen. Um ein möglichst schnelles Schließen zu ermöglichen, kann dieser Steuerraum mit einer Unterdruckquelle verbunden werden. Die Schließkraft wird weiterhin durch die Federkraft einer Feder unterstützt. Bei heutigen Motoren können sehr hohe Unterdrücke (ca. 150 mbar) im Abgassystem auftreten. Dies führt dazu, dass zum sicheren Verschließen eines Sekundärluftventiles hohe Schließkräfte zur Verfügung stehen müssen. Die Unterstützung einer Federschließkraft durch betriebsabhängige Überdruck- oder Unterdruckquellen ist in diesem Falle nicht ausreichend. Eine Ansteuervorrichtung gemäß dem bekannten Stand der Technik ist auch aus der US 4,014,169 A bekannt.

Hiervon ausgehend liegt der Erfindung die Aufgabe zur Grunde, eine gattungsgemäße Ansteueranordnung für ein Sekundärluftventil derart weiter zu entwickeln, dass ein unbeabsichtigtes Öffnen des Sekundärluftventils in allen Motorbetriebszuständen verhindert wird.

Diese Aufgabe wird dadurch gelöst, dass das Umschaltventil mit einem ersten Anschluss mit dem ersten Steuerraum verbunden ist, mit einem zweiten Anschluss mit einer Unterdruckquelle verbunden ist und mit einem dritten Anschluss mit einem Druckbehälter verbunden ist, wobei der Druckbehälter mit einer Druckquelle derartig fluidisch verbunden ist, dass im Druckbehälter Überdruck herrscht.

Auf diese Weise wird gewährleistet, dass das Sekundärluftventil in allen Betriebsbedingungen, insbesondere auch im Schubbetrieb, sicher geschlossen ist. Mit der zusätzlichen Druckbeaufschlagung kann das Ventil gegen deutlich höhere Unterdrucke im Abgassystem zugehalten werden.

Hierbei hat es sich als besonders vorteilhaft erwiesen, dass sowohl die Unterdruckquelle als auch die Druckquelle in einem Saugrohr ausgebildet sind, wobei die fluidische Verbindung zwischen dem Druckbehälter und dem Saugrohr lediglich bei einem Druck Pₛ im Saugrohr größer als der Druck P_{b} im Druckbehälter hergestellt ist. In einer besonderen Ausführungsform ist hierbei in der fluidischen Verbindung zwischen Druckbehälter und Saugrohr ein Rückschlagventil vorgesehen. Dieses Rückschlagventil ist vorteilhafter Weise im Druckbehälter angeordnet.

Auch kann der Druckbehälter ein zweites Rückschlagventil aufweisen, damit eine fail-save-Funktion im Falle eines nicht ideal dichtenden ersten Rückschlagventiles gewährleistet ist. Auf diese Weise wird sichergestellt, dass in allen Betriebszuständen zumindest Atmosphärendruck im Druckbehälter vorliegt, da jedes Ventil in Hinblick auf die Lebensdauer eine gewisse Leckage aufweist. Desweiteren kann der Druckbehälter ein Druckbegrenzungsventil, das als Pop-off Ventil ausgeführt ist, aufweisen, das bei Überschreitung eines Grenzdruckes öffnet und bei Unterschreitung desselben wieder schließt.

Nachfolgend wird die Erfindung anhand einer Ausführungsform unter Bezugnahme auf die anliegende Zeichnung nähert erläutert.

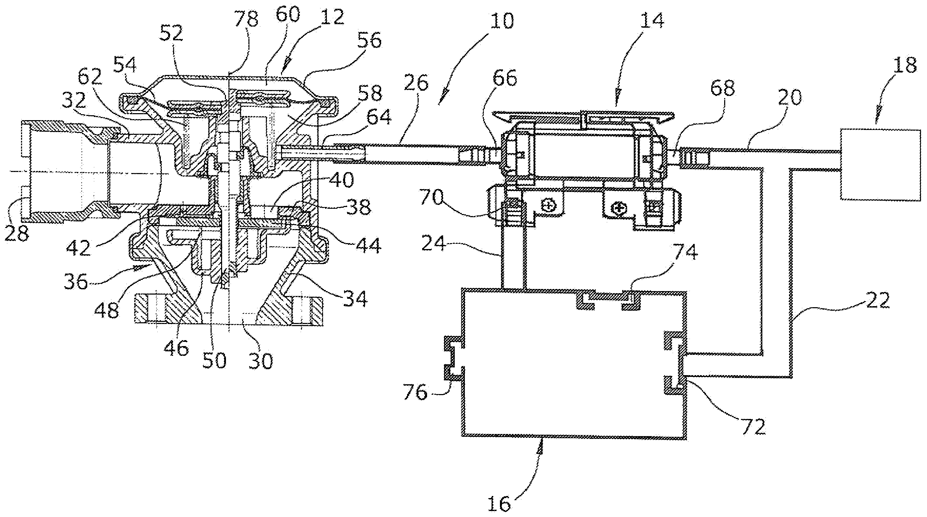

Die Zeichnung zeigt eine schematische Darstellung einer erfindungsgemäßen Ansteueranordnung 10 mit einem in Schnittansicht dargestellten abschaltbaren Sekundärluftventil 12 einem Umschaltventil 14, einem Druckbehälter 16, sowie einem schematisch dargestellten Saugrohr 18 und Leitungen 20, 22, 24 und 26.

Zunächst wird das abschaltbare Sekundärluftventil 12 beschrieben. Das Ventil 12 weist einen Einlass 28 sowie einen Auslass 30 auf, die in einem im Wesentlichen aus zwei Teilen 32, 34 bestehenden Gehäuse 36 angeordnet sind. Zwischen den beiden Gehäuseteilen 32, 34 ist ein Ventilsitz 38 ausgebildet. Das Sekundärluftventil 12 ist in der linken Hälfte der Zeichnung in Offen-Stellung und in der rechten Hälfte der Zeichnung in Geschlossen-Stellung dargestellt. Desweiteren weist der Ventilsitz 38 Durchlassöffnungen 40 auf, wovon eine Durchlassöffnung 40 in der rechten Hälfte im Schnitt dargestellt ist. Der Ventilsitz 38 trägt ferner ein ringförmiges Dichtelement 42, wobei das Dichtelement 42 Bestandteil des Ventilsitzes 38 ist. An dem Dichtelement 42 liegt ein Ventilkörper 44 an. Desweiteren ist ein Verschlusselement 46 vorgesehen, dass dem Ventilkörper 42 mittels einer Feder 48 unter Vorspannung hält. Der Verschlusskörper 46 ist mit einer Ventilstange 50 verbunden, die den Verschlusskörper 46 von einer Geschlossen-Stellung in eine Offen-Stellung überführen kann und vice versa. Die Ventilstange 50 ist an dem Verschlusskörper 46 gegenüberliegenden Ende mit einem tellerförmigen Element 52 versehen, wobei das tellerförmige Element 52 wiederrum über eine Membrane 54 mit dem Gehäuseteil 32 verbunden ist. Die Verbindung erfolgt dabei über einen am Rand umgebbördelten Deckel 56. Die Membrane 56 ist gasundurchlässig und trennt zusammen mit dem tellerförmigen Element 52 einen ersten Steuerraum 58 von einem zweiten Steuerraum 60. Das tellerförmige Element 52 stützt sich mittels einer zweiten Feder 62 am Gehäuseteil 32 ab. Auf diese Weise wird das tellerförmige Element 52 und damit die Ventilstange 50 derart unter Vorspannung gehalten, dass das Sekundärluftventil 12 im Ausgangszustand in einer Geschlossen-Stellung verharrt.

Über einen Anschfussstutzen 64 und die Leitung 26 ist der erste Steuerraum mit einem Ausgangsanschluss 66 des Umschaltventils 14 fluiddicht verbunden. Das elektrische Umschaltventil 14 weist des Weiteren zwei Eingangsanschlüsse 68 und 70 auf, wovon der erste Eingangsanschluss 68 über die Leitung 20 mit dem Ansaugrohr 18 verbunden ist und der zweite Eingangsanschluss 70 über die Leitung 24 mit dem Druckbehälter 16 fluiddicht verbunden ist. Das elektrische Umschaltventil 14 kann auf bekannte Weise den Ausgangsanschluss 66 mit dem ersten Eingangsanschluss 68 oder den zweiten Eingangsanschluss 70 verbinden. Darüberhinaus ist der Druckbehälter 16 über eine Verbindungsleitung 22 und der Leitung 20 ebenfalls mit dem Ansaugrohr 18 verbunden. Im vorliegenden Ausführungsbeispiel ist die Leitung 22 über ein erstes Rückschlagventil 72 mit dem Druckbehälter 16 verbunden. Das Rückschlagventil 72 ist hier im Druckbehälter 16 angeordnet. Im vorliegenden Ausführungsbeispiel weist der Druckbehälter noch ein zweites Rückschlagventil 74 auf, dass eine fail-save-Funktion dient. Des Weiteren ist ein Pop-off-Ventil 76 vorgesehen, das als Druckbegrenzungsventil für den Druckbehälter 16 dient.

Die Ansteueranordnung 10 für ein Sekundärluftventil 12 kann nun wie folgt betrieben werden:
So lange eine nicht dargestellte Sekundärluftpumpe außer Betrieb ist und eine Sekundärluftzufuhr in den Abgaskanal nicht gewünscht ist, soll das Sekundärluftventil 12 in einer Geschlossen-Stellung verharren. Hierzu nimmt die Ventilstange 50 und das damit verbundene Verschlusselement 46 die in der rechten Hälfte der Schnittansicht des Sekundärluftventils 12 dargestellte obere Position ein, wodurch ein Öffnen des Ventilgliedes 44 verhindert ist. Diese obere Position der Ventilstange 50 wird zum einen durch die auf das tellerförmige Element 52 wirkende Federkraft der Feder 62 erreicht und zum anderen durch einen im ersten Steuerraum 64 wirkenden Überdruck. Dieser Überdruck wird durch eine fluidische Verbindung des ersten Steuerraums 58 über das Umschaltventil 14 mit dem Ansaugrohr 18 gewährleistet. Für den Fall, dass zum Beispiel im Motorschubbetrieb kein Überdruck im Saugrohr 18 zur Verfügung steht, kann das Umschaltventil 14 eine fluidische Verbindung des ersten Steuerraumes 58 mit dem Druckbehälter 16 herstellen, wodurch ebenfalls der erste Steuerraum 58 mit Überdruck beaufschlagt ist. In jedem Falle wird der Druckbehälter 16 bei einem Druck im Ansaugrohr Pₛ größer als der Druck P_{b} im Druckbehälter 16 über die Leitung 22 mit Druck beaufschlagt, da bei einem derartigen Druckverhältnis das Rückschlagventil 72 öffnet. Im Falle eines nicht ideal dichtenden Rückschlagventils 72, das nicht ideal dicht schließt und einem Unterdruck im Ansaugrohr 18, ist über das Rückschlagventil 74 gewährleistet, dass im Druckbehälter 16 zumindest in jedem Betriebszustand Atmosphärendruck herrscht. Auf diese Weise wird ein unbeabsichtigtes Beaufschlagen des ersten Steuerraumes 58 mit Unterdruck verhindert.

Ist eine Sekundärluftzufuhr in den Abgaskanal gewünscht und wird die Sekundärluftpumpe in Betrieb genommen, kann das Sekundärluftventil auf bekannte Weise durch eine fluidische Verbindung des ersten Steuerraumes 58 über das Umschaltventil 14 mit dem Ansaugrohr 18 mit Unterdruck derart beaufschlagt werden, dass die Ventilstange und damit das Verschlusselement 46 in die untere, in der linken Hälfte dargestellten Position verschoben wird. Der am Einlass 28 vorliegende Sekundärluftdruck wird dann den Ventilkörper 44 vom Ventilsitz wegbewegen, sodass eine Fluidische Verbindung vom Einlass 28 über die Ventilöffnungen 40 zum Auslass 30 hergestellt ist. Um ein schnelles Öffnen und Schließen des Sekundärluftventlis 12 zu gewährleisten, ist im vorliegenden Ausführungsbeispiel der zweite Steuerraum 60 über eine Öffnung 78 mit der Atmosphäre verbunden.

## Patentansprüche

1. Ansteueranordnung für ein Sekundärluftventil (12) einer Abgasanlage mit einem einen Einlass (28) und einen Auslass (30) aufweisenden Ventilgehäuse (36), mit einem zwischen dem Einlass (28) und dem Auslass (30) angeordneten, eine Ventilöffnung aufweisenden Ventilsitz (38) und mit einem relativ zur Ventilöffnung zwischen einer Offen-Stellung und einer Geschlossen-Stellung über eine Ventilstange bewegbaren Ventilkörper (44), mit einem ersten (58) und einem zweiten (60) Steuerraum, die durch eine Membrane (54) fluiddicht voneinander getrennt sind, wobei die Membrane (54) auf die Ventilstange einwirkt und wobei ein Umschaltventil (14) vorgesehen ist, das mit einem Steuerraum (58, 60) derart fluidisch verbunden ist, dass der Steuerraum mit einem Unterdruck oder einem Überdruck beaufschlagbar ist, dadurch **gekennzeichet, dass** das Umschaltventil (14) mit einem ersten Anschluss (66) mit dem ersten Steuerraum (58) verbunden ist, mit einem zweiten Anschluss (68) mit einer Unterdruckquelle (18) verbunden ist und mit einem dritten Anschluss (70) mit einem Druckbehälter (16) verbunden ist, wobei der Druckbehälter (16) mit einer Druckquelle derart fluidisch verbunden ist, dass im Druckbehälter Überdruck herrscht.

2. Ansteueranordnung nach Anspruch 1, **dadurch gekennzeichnet, dass** sowohl die Unterdruckquelle als auch die Druckquelle in einem Saugrohr ausgebildet sind, wobei die fluidische Verbindung zwischen dem Druckbehälter und dem Saugrohr lediglich bei einem Druck p_{S} im Saugrohr grösser als der Druck p_{B} im Druckbehälter hergestellt ist.

3. Ansteueranordnung nach Anspruch 2, **dadurch gekennzeichnet, dass** in der fluidischen Verbindung zwischen Druckbehälter und Saugrohr ein Rückschlagventil (72) vorgesehen ist.

4. Ansteueranordnung nach Anspruch 3, **dadurch gekennzeichnet, dass** das Rückschlagventil (72) im Druckbehälter (16) angeordnet ist.

5. Ansteueranordnung nach Anspruch 3, **dadurch gekennzeichnet, dass** ein zweites Rückschlagventil (74) im Druckbehälter angeordnet ist.

6. Ansteueranordnung nach einem der vorhergehenden Ansprüche, **dadurch gekennzeichnet, dass** der Druckbehälter ein Druckbegrenzungsventil aufweist.

## Claims

1. Control assembly for a secondary air valve (12) of an exhaust gas system comprising a valve housing (36) having an inlet (28) and an outlet (30) with a valve seat (38) arranged between the inlet (28) and the outlet (30) and having a valve opening, and comprising a valve body (44) movable, by means of a valve rod, between an open position and a closed position with respect to the valve opening, comprising a first (58) and a second (60) control chamber separated from each other in a fluid-tight manner by a membrane (54), said membrane (54) acting on the valve rod, and wherein a switch valve (14) is provided that is fluidically connected with a control chamber (58, 60) such that a vacuum or an overpressure can be applied to the control chamber, **characterized in that** the switch valve (14) is connected to the first control chamber (56) via a first port (66), is connected to vacuum source (18) via a second port (68), and is connected to a pressure container (16) via a third port (70), wherein the pressure container (18) is fluidically connected to a pressure source such that an 0overpressure prevails in the pressure container.

2. Control assembly of claim 1, **characterized in that** both the vacuum source and the pressure source are formed in an intake pipe, wherein the fluidic connection between the pressure container and the intake pipe is established only at a pressure pₛ in the intake pipe higher than the pressure pₑ in the pressure container.

3. Control assembly of claim 2, **characterized in that** a check valve (72) is provided in the fluidic connection between the pressure container and the intake pipe.

4. Control assembly of claim 3, **characterized in that** the check valve (72) is arranged in the pressure container (16).

5. Control assembly of claim 3, **characterized in that** a second check valve (74) is arranged in the pressure container.

6. Control assembly of one of the preceding claims, **characterized in that** the pressure container comprises a pressure relief valve.

## Revendications

1. Agencement de commande pour une vanne d'air secondaire (12) d'un système de gaz d'échappement avec un carter de vanne (36) ayant une entrée (28) et une sortie (30), avec un siège de vanne (38) disposé entre l'entrée et la sortie (30) et ayant une ouverture de vanne, et avec un corps de vanne (44) déplaçable, à l'aide d'une tige de vanne, par rapport à l'ouverture de vanne entre une position ouverte et une position fermée, avec une première (58) et une deuxième (60) chambre de commande séparées l'une de l'autre de manière étanche à fluide par une membrane (54), la membrane (54) agissant sur la tige de vanne, une vanne de commutation (14) étant prévue qui est reliée fluidiquement à une chambre de commande (58, 60) de sorte que la chambre de commande peut être soumise à une dépression ou une surpression, **caractérisé en ce que** la vanne de commutation (14) est reliée à la première chambre de commande (58) par un premier raccord (66), est reliée à une source de dépression (18) par un deuxième raccord (68) et est reliée à un récipient sous pression (16) par un troisième raccord (70), ledit récipient de pression (16) étant relié fluidiquement à une source de pression de sorte qu'une surpression règne dans le récipient de pression.

2. Agencement de commande selon la revendication 1, **caractérisé en ce que** la source de dépression ainsi que la source de pression est formée dans un tube d'aspiration, la communication fluidique entre le récipient de pression et le tube d'aspiration n'étant réalisée qu'à une pression pₛ dans le tube d'aspiration supérieure à la pression pₑ dans le récipient de pression.

3. Agencement de commande selon la revendication 2, **caractérisé en ce qu'**un clapet anti-retour (72) est prévu dans la communication fluidique entre le récipient de pression et le tube d'aspiration.

4. Agencement de commande selon la revendication 3, **caractérisé en ce que** le clapet anti-retour (72) est disposé dans le récipient de pression.

5. Agencement de commande selon la revendication 3, **caractérisé en ce qu'**un deuxième clapet anti-retour (74) est disposé dans le récipient de pression.

6. Agencement de commande selon l'une quelconque des revendications précédentes, **caractérisé en ce que** le récipient de pression comprend un clapet de surpression.
